# EUROPÄISCHE PATENTSCHRIFT

(11) **EP 0 282 046 B1**
(45) Veröffentlichungstag und Bekanntmachung des Hinweises auf die Patenterteilung: **02.06.1993**
(21) Anmeldenummer: 88103747.7
(22) Anmeldetag: 09.03.1988
(51) Int. Cl.: B23F 23/12, B23F 5/04, B23F 21/02

(54) **Werkzeugmaschine zum Feinarbeiten der Zahnflanken von vorverzahnten Zahnrädern**
Machine tool for finishing the tooth flanks of roughly cut gears
Machine-outil pour la finition de flancs de dents sur des ébauches de roues dentées

(30) Priorität: 10.03.1987 DE 3707664
(43) Veröffentlichungstag der Anmeldung: 14.09.1988
(73) Patentinhaber: Liebherr-Verzahntechnik GmbH, 87432 Kempten (DE)
(72) Erfinder: Sulzer, Gerd, Dr., D-8961 Wiggensbach (DE)
(74) Vertreter: Klunker . Schmitt-Nilson . Hirsch

(56) Entgegenhaltungen:
- DE-A- 2 301 312
- GB-A- 2 008 995
- GB-A- 2 113 584
- GB-A- 2 145 186
- US-A- 2 214 225
- US-A- 3 169 349
- US-A- 3 561 321
- PATENT ABSTRACTS OF JAPAN, Band 11, Nr. 228 (M-610)[2675], 24. Juli 1987; & JP-A-62 044 310 (MITSUBISHI HEAVY IND. LTD) 26-02-1987
- PATENT ABSTRACTS OF JAPAN, Band 10, Nr. 187 (M-493)[2243], 2. Juli 1986; JP-A-61 030 321 (MITSUBISHI HEAVY IND. LTD) 12-02-1986
- K. BERG et al.: "Encylopedie van de materialenkennis", 3. Teil P-Z, 1963, Seite 85, Agon Elsevier, Amsterdam, NL
- V.D.I. ZEITSCHRIFT, Band 125, Nr. 17, September 1983, Seiten 657-660, Düsseldorf, DE; R. KOCH: "Zahnradhonen - ein konkurrenzfähiges Feinbearbeitungsverfahren"
- MACHINES AND TOOLING, Band 35, Nr. 8, August 1964, Seiten 40-41; S.I. ZHITNITSKII et al.: "Chamfering gear teeth with multi-ribbed grinding wheel"
- MACHINERY AND PRODUCTION ENGINEERING,Band 143, Nr. 3680, Oktober 1985, Seiten 40-41, Horton Kirby, Kent, GB; "CNC adds a touch of flexibility"

## Beschreibung

Die Erfindung betrifft eine Werkzeuganordnung zum Feinbearbeiten der Zahnflanken von vorverzahnten Zahnrädern im Abwälzverfahren, mit einem Werkzeug in Form einer Schleifschnecke zum Wälzschleifen, die einen stählernen Grundkörper, der mit Hartstoffkörnern beschichtet ist, sowie mehrere Windungen aufweist. Die Erfindung betrifft gemäß Oberbegriff von Patentanspruch 7 auch eine Werkzeugmaschine zum Feinbearbeiten der Zahnflanken vorverzahnter Zahnräder.

Bei Verzahnverfahren, die im Wälzverfahren arbeiten, entsteht das Zahnprofil durch Hüllschnitte, d.h. die Zahnflanke wird nicht exakt ausgebildet, sondern durch eine endliche Anzahl von Hüllschnitten facettenartig angenähert. Jeder Hüllschnitt des Hüllschnittprofils berührt das theoretische Evolventenprofil in einem Punkt, alle übrigen Punkte weichen vom Evolventenprofil ab. Die aus dem Axialvorschub des Werkzeugs entstehenden Vorschubmarkierungen überlagern sich den Hüllschnittmarkierungen in Profilrichtung. Diese in Zahnlängsrichtung orientierten Markierungen stören beim Abrollen bzw. Abwälzen von Zahnradpaarungen und führen zu einer unerwünschten Geräuschentwicklung.

Es sind eine Reihe von Feinbearbeitungsverfahren, wie beispielsweise das Honen oder Läppen bekannt, mit welchen diese Abweichungen von der Evolventenform beseitigt werden können. Man bezeichnet diese Verfahren als Verfahren zur Feinstbearbeitung, die den Feinbearbeitungsverfahren, wie dem Wälzschleifen oder Schälwälzfräsen nachgeordnet sind. In typischer Weise wird durch diese Verfahren zur Feinstbearbeitung die Oberflächenrauhigkeit der Flanken des Zahnrades auf unter 4 Mikrometer vermindert.

Aus der US-A 2,214,225 ist es bereits bekannt, zwei Schabräder mit unterschiedlichen Wirkeigenschaften auf einer gemeinsamen Spindel axial hintereinander anzuordnen, wobei das zu bearbeitende Zahnrad durch eine Axialverschiebung des Werkzeugs zunächst mit dem einen Schabrad und danach mit dem anderen Schabrad beaufschlagt wird. Um beim Umschalten einen Eingriff zwischen Werkzeug und Werkstück aufrechtzuerhalten, ist zwischen den Schabrädern ein kleineres Blindrad angeordnet, das beim Umschalten dafür sorgt, daß die Relativstellung von Werkzeug und Werkstück erhalten bleibt. Das Schaben von Zahnrädern ist ein Verfahren, das wirkungsvoll nur im ungehärteten Zustand der Zahnräder eingesetzt werden kann, wodurch Verzugsfehler beim Härten die Endqualität verschlechtern.

In neuerer Zeit setzt sich zur Feinbearbeitung von vorverzahnten Zahnrädern das Wälzschleifen mehr und mehr durch, bei dem nach dem Prinzip des Wälzfräsens eine Schleifschnecke auf den Zahnflanken des nachzubearbeitenden Zahnrades abgewälzt wird. Derartige Schleifmaschinen sind bekannt, eine typische Konstruktion ist unter der Bezeichnung RZ 300E in der Werbeschrift der Firma Reishauer (Kd. 1 182 200) beschrieben und dargestellt.

Die zum Schleifen verwendeten Schleifschnecken verursachen eine relativ große Oberflächenrauhigkeit, die überdies eine ungünstige Orientierung aufweist und die dadurch zu einer relativ hohen Geräuschentwicklung führt. Dieses Problem läßt sich nur dadurch abstellen, daß entweder ein kleineres Korn verwendet wird, wodurch aber die Leistung in uninteressante Bereiche absinkt, oder aber die Zahnräder nach dem Schleifen nochmals poliert oder gehont werden. Das Polieren erfolgt üblicherweise auf gesonderten Maschinen, deren Kinematik wiederum den bekannten Wälzfräs- bzw. Wälzschleifmaschinen entspricht. Die Werkstücke mussen allerdings in diese Maschinen separat eingespannt und neu synchronisiert werden. Die dafür erforderlichen Umrüst- und Nebenzeiten summieren sich zu einem in der modernen Zahnradfertigung nicht akzeptablen Wert auf.

Aus der DE-A 23 01 312 ist ein schneckenförmiges Werkzeug zum Honen von Zahnrädern bekannt, das aus einem weich-elastischen Kunststoff mit eingelagerten Schleifmittelteilchen besteht. Das Honen unterscheidet sich vom Schleifen insofern, als beim Honen nur das Werkzeug angetrieben wird und das Werkstück entsprechend mitgeschleppt wird, wobei zwangsläufig immer nur eine Flanke bearbeitet werden kann. Ganz generell hat ein weich-elastisches Hon- oder Polierwerkzeug den Vorteil, daß eine Verbesserung der Oberflächenrauhigkeit erzielbar ist, ohne daß zu hohe Anforderungen an die Exaktheit der Synchronisationsgetriebe gestellt werden müssen. Ein elastisches Werkzeug ist außerdem in der Lage, sich bestimmten gewollten Profilabweichungen anzupassen bzw. diese zu kompensieren.

Der vorliegenden Erfindung liegt ausgehend von dem an zweiter Stelle genannten Stand der Technik die Aufgabe zugrunde, die Stückzeiten bei der Herstellung von geschliffenen und polierten Zahnrädern gegenüber den bisher erreichbaren Werten weiter zu senken.

Erfindungsgemäß wird diese Aufgabe durch die Merkmale der Patentansprüche 1 und 7 gelöst. Der Kern der Erfindung besteht in der Verwendung eines neuartigen Werkzeugs im Rahmen einer im Prinzip bekannten Wälzschleifmaschine, wobei sich das Werkzeug dadurch auszeichnet, daß es hintereinander mit axialem Abstand auf ein- und derselben Werkzeugspindel eine Schleifschnecke und eine Polierschnecke aufweist, deren Zahnprofil sich im wesentlichen entsprechen und deren Windungen entlang einer gemeinsamen, nicht unterbrochenen Schraubenlinie verlaufen. Einmal synchronisiert, kann das zu bearbeitende Zahnrad hintereinander mit der Schleifschnecke und Polierschnecke in Eingriff kommen, ohne daß erneut eingespannt und eingefädelt werden muß.

Durch die Kombination Schleifschnecke und Polierschnecke können die Funktionen dieser beiden Werkzeuge klar getrennt werden, d.h. daß durch die Polierschnecke keinerlei Materialabtragung mehr erfolgt. Die Polierschnecke kann so weich ausgebildet werden, daß sie tatsächlich nur noch die Oberflächenrauhigkeit verbessert und sich der vorhandenen Flankengeometrie perfekt anpaßt.

Von Bedeutung ist weiterhin, daß sich die Schraubenflächen bzw. der Windungsverlauf der Schleifschnecke ohne Unterbrechung kontinuierlich in der Polierschnecke fortsetzt, wobei das axiale Distanzstück zwischen Schleif- und Polierschnecke durch ein "gedachtes" Windungsstück überbrückt wird. Nur dadurch wird erreicht, daß eine erneute Synchronisation beim Eintauchen der Polierschnecke in das Zahnrad entfallen kann.

Obwohl das Zahnprofil der Polierschnecke im wesentlichen gleich dem der Schleifschnecke sein soll, sind Abweichungen möglich, um beispielsweise einen erhöhten Flankendruck zwischen Werkzeug und Werkstück zu erzeugen.

Die Elastizität der verwendeten Polierschnecke erlaubt es, die Oberflächenrauhigkeit der Werkstückflanke zu verbessern, ohne daß dafür zusätzliche Maschinenbewegungen erforderlich wären und ohne daß die Flankengeometrie des Werkzeugs geändert werden müßte.

Die besonderen Vorteile der Verwendung einer weichelastischen Polierschnecke werden u.a. auch darin gesehen, daß temperaturbedingte Verlagerungen des Werkzeugs gegenüber dem Werkstück in der Größenordnung von etwa 20 Mikrometer ausgeglichen werden, so daß immer ein sicherer Kontakt zwischen Werkstück und Werkzeug besteht.

Gegenüber einer feinen, jedoch harten Schleifschnecke besteht der weitere Vorteil darin, daß der theoretische Berührpunkt zwischen Werkstück und Werkzeug in eine Beruhrfläche vergrößert wird. Innerhalb dieser Fläche treten Relativbewegungen des Schleifmaterials gegenüber der Werkstückflanke auf, die nicht die gleiche Richtung der Markierungen aufweisen, die bei der vorausgegangenen Feinbearbeitung erzeugt wurden. Diese Markierungen oder auch Riefen können dadurch praktisch besser bearbeitet werden.

Das Werkzeug, d.h. die Polierschnecke besteht vorzugsweise aus einer metallischen Büchse, um eine feste Aufspannung auf der Werkzeugspindel zu ermöglichen. Die eigentlichen Schneckenwindungen bestehen aus einem elastischen Kunststoffmaterial, in welches das Schleifmittel eingebettet ist. Als Kunststoffmaterial kommt ein Thermoplast in Frage, das Schleifmittel kann Siliziumcarbid, Edelkorund oder auch jedes andere geeignete Material sein. Die optimale Korngrößenverteilung und der Füllstoffgrad in der Kunststoffmatrix können je nach Anwendung in einfachen Versuchsreihen festgestellt werden.

Die Elastizität (Shore-Härte) des Materials muß so ausgewählt werden, daß die Flanken des Werkzeugs einer Rauhigkeit des vorbearbeiteten Zahnrades von etwa +-30 Mikrometer kompensieren können.

Zum Abrichten des Werkzeugs eignet sich zum Beispiel ein hartstoffbelegtes Meisterrad, wie es zum Abrichten von Schleifscheiben und anderen Werkzeugen bekannt ist. Vorzugsweise kann jedoch das Kunststoffmaterial und das Schleifmittel so aufeinander abgestimmt sein, daß ein Selbstschärfeffekt auftritt. Diese Abrichtmethode hat den Vorteil, daß eine selbsttätige Anpassung der Werkzeuggeometrie an die Werkstückgeometrie erfolgt, ohne daß dazu eine spezielle Abrichteinrichtung erforderlich wäre.

Weitere vorteilhafte Weiterbildungen der Erfindung sind in den Unteransprüchen beschrieben.

Nachfolgend wird ein Ausführungsbeispiel der Erfindung anhand der beigefügten Zeichnung beispielsweise beschrieben. Darin zeigen:
- Fig. 1: die schematische Darstellung einer Wälzschleifmaschine,

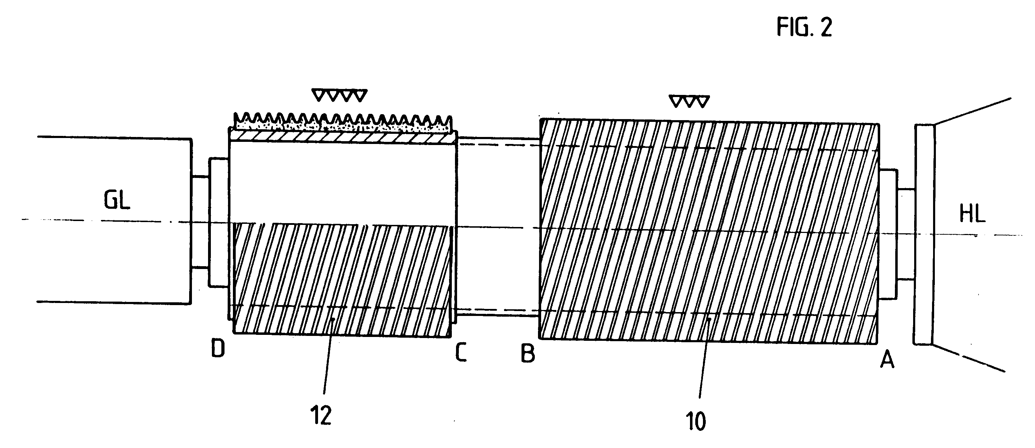

- Fig. 2: die schematische Darstellung einer Werkzeugspindel, auf der eine Polierschnecke und eine Schleifschnecke hintereinander angeordnet sind,
- Fig. 3: ein Wegdiagramm der Werkzeugspindel nach Fig. 2 beim Durchfahren einer Zahnlücke im Diagonal-Abwälzverfahren.

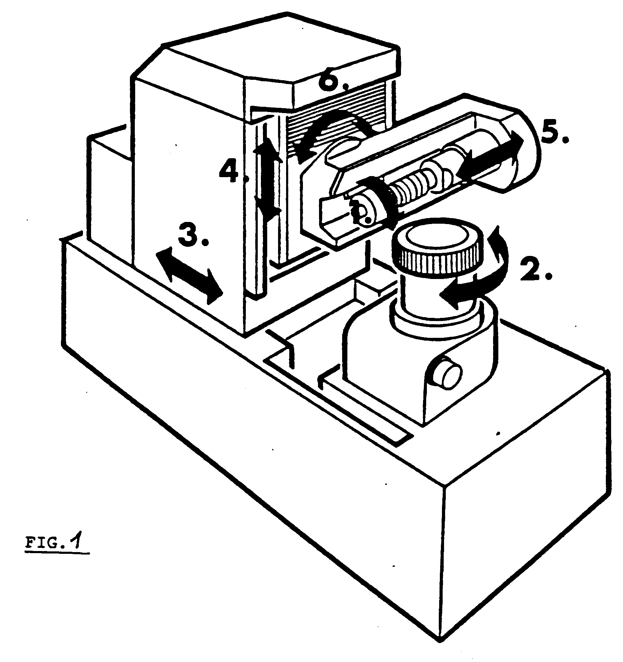

Die Maschine, auf welcher die Polierschnecke zum Einsatz kommt, kann beispielsweise eine in Fig. 1 gezeigte Wälzschleifmaschine sein. Kontinuierlich arbeitende Wälzschleifmaschinen sind mit einer Schleifschnecke als Werkzeug ausgestattet. Das Verfahren, das man auch als Schraubwälzschleifen bezeichnet, ist identisch mit dem bekannten Wälzfräsen.

Auf dem Maschinenbett befindet sich der ortsfeste Werkstücktisch, auf dem ein vorverzahntes Zahnrad mit einer entsprechenden Aufspannvorrichtung mit senkrechter Achse festgespannt wird. Das Werkstück kann zur Wälzkopplung mit der Werkzeugschnecke um seine senkrechte Achse gedreht werden. Die Bewegung ist durch den mit 2 bezeichneten Pfeil symbolisiert.

Der radial verschiebbare Hauptständer (die radiale Zustellrichtung ist mit dem durch 3 bezeichneten Pfeil symbolisiert) trägt einen Tangentialschlitten zur tangentialen Verschiebung der Werkzeugschnecke (diese Verschieberichtung ist mit dem mit 5 bezeichneten Pfeil gekennzeichnet). Der Tangentialschlitten kann darüberhinaus axial verfahren werden (Pfeil 4) und um eine horizontale Achse verschwenkt werden (Pfeil 6).

Auf dem Werkzeug- bzw. Tangentialschlitten ist auf der Werkzeugspindel zwischen dem Gegenlager (GL) und dem Hauptlager (HL) eine Schleifschnecke 10 vor einer Polierschnecke 12 fest eingespannt. Zwischen Schleifschnecke und Polierschnecke ist eine kurze Distanzbüchse angeordnet, um das saubere Ausfahren der einen und das Einfahren der anderen Schnecke sicherzustellen.

Bei der Schleifschnecke 10 handelt es sich um eine starre Schnecke mit beispielsweise einer Harstoffbeschichtung. Vorzugsweise ändert sich die Flankengeometrie der Schleifschnecke über ihre axiale Länge, um beim Durchfahren der Zahnlücke entsprechende Flankenkorrekturen zu bewirken.

Die Polierschnecke dagegen besteht aus einem elastischen Kunststoffmaterial. Das Zahnprofil der Schneckenwindungen bleibt über die axiale Länge gleich. Im übrigen entsprechen sich die Schnecken hinsichtlich Durchmesser, Gangzahl und Steigungswinkel, wobei geringe Abweichungen von Durchmesser und Steigungswinkel möglich sind.

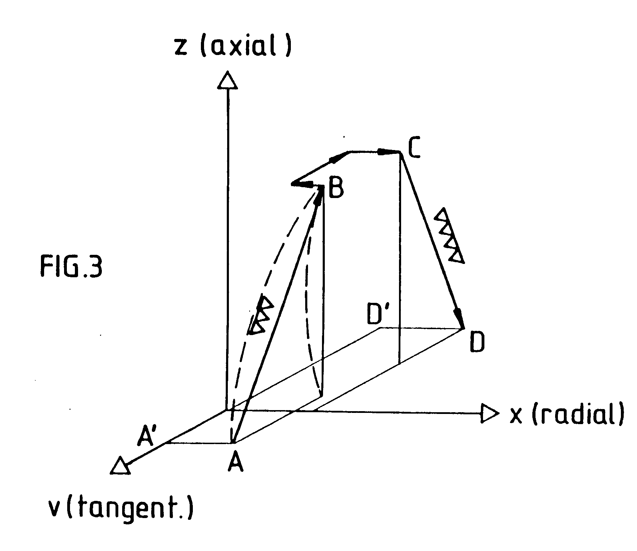

In Fig. 3 ist das Weg/Zeit-Diagramm der Werkzeugspindel gegenüber dem Werkzeug dargestellt. Die drei Koordinatenachsen bezeichnen die Geschwindigkeit in tangentialer, axialer und radialer Richtung.

Von Dʹ nach Aʹ erfolgt der Werkstückwechsel und das Einfädeln der Schleifschnecke in eine Zahnlücke des vorverzahnten Werkrades. Nach radialer Zustellung von Aʹ bis A beginnt der Diagonalhub mit einer tangentialen und einer axialen Geschwindigkeitskomponente von A nach B. Tatsächlich ist der zurückgelegte Weg nicht genau geradlinig, sondern zur Erzeugung einer gewissen Breitenballigkeit der Zahnflanken leicht gekrümmt. Diese gekrümmte Bahn ist durch eine gestrichelte Linie angedeutet. Im Punkt B angekommen, erfolgt ein Ausrücken der Werkzeugspindel gefolgt von einer kurzen axialen Bewegung und einem erneuten radialen Eintauchen, wodurch die ersten Windungen der Polierschnecke mit den entsprechenden Zahnlücken des Werkrades in Eingriff kommen. Beim Reversieren des Werkzeugschlittens von C nach D werden sämtliche Zahnlücken des Werkrades beaufschlagt, d.h. poliert.

Während die Schleifschnecke infolge ihrer abrasiven Wirkung und ihrer über die axiale Länge unterschiedlichen Flankengeometrie entsprechende Korrekturen und Abträge am Werkrad vornimmt, erfolgt bei der Polierschnecke nur noch eine Verminderung der Oberflächenrauhigkeit.

Das erfindungsgemäße Verfahren wurde beispielsweise bei einem Zahnrad mit der Zähnezahl 35, einem Schrägungswinkel von 33°, einem Modul von 2 mm und einer Zahnbreite von 14,7 mm durchgeführt. Der Schneckendurchmesser betrug 140 mm. Das Zahnrad wies noch ein Aufmaß von 0,12 mm pro Flanke auf.

Die Drehzahl der Werkzeugspindel kann 10900 Umdrehungen pro Minute betragen, was eine Umfangsgeschwindigkeit von 80 m/s ergibt. Die Drehzahl des Werkstücktisches beträgt 312 Umdrehungen pro Minute.

Der Bahnvorschub pro Werkstückumdrehung beträgt 1 mm, fur den Schleifvorgang werden insgesamt 6 Sekunden benötigt.

Für das Polieren beim Rückhub werden die gleichen Geschwindigkeiten gefahren, lediglich der Vorschub pro Werkstückumdrehung wird auf 0,8 mm verringert. Für das Schleifen werden insgesamt 8 Sekunden benötigt. Die Nebenzeiten betragen im beschriebenen Fall 4 Sekunden, so daß die Gesamtbearbeitungszeit des Zahnrades bei 18 Sekunden liegt.

Die vorstehend angegebenen Werte sind selbstverständlich nur ein Beispiel. Je nach Art des Werkstoffs und je nach den Abmessungen des Zahnrades müssen andere Parameter eingestellt werden.

## Patentansprüche

1. Werkzeuganordnung zum Feinbearbeiten der Zahnflanken von vorverzahnten Zahnrädern im Abwälzverfahren, mit einem Werkzeug in Form einer Schleifschnecke (10) zum Wälzschleifen, die einen stählernen Grundkörper, der mit Hartstoffkörnern beschichtet ist, sowie mehrere Windungen aufweist,
dadurch gekennzeichnet,
daß sich an die Schleifschnecke (10) ein axiales Distanzstück mit reduziertem Durchmesser anschließt, dem ein zweites Werkzeug in Form einer Polierschnecke (12) mit mehreren Windungen folgt, die aus einem weich-elastischen Kunststoffmaterial mit eingebetteten Hartstoffkörnern besteht, und daß die Windungen der Schleif- und Polierschnecken hinsichtlich Steigung und Profil einander entsprechen.

2. Werkzeuganordnung nach Anspruch 1,
dadurch gekennzeichnet,
daß die Polierschnecke (12) und die Schleifschnecke (10) ein im wesentlichen gleiches Zahnprofil aufweisen.

3. Werkzeuganordnung nach Anspruch 1 oder 2,
dadurch gekennzeichnet,
daß die Polierschnecke (12) eine metallische Büchse, vorzugsweise aus Stahl, zur Aufnahme einer Werkzeugspindel aufweist.

4. Werkzeuganordnung nach einem der Ansprüche 1 bis 3,
dadurch gekennzeichnet,
daß der Kunststoff der Polierschnecke (12) ein Thermoplast ist.

5. Werkzeuganordnung nach einem der Ansprüche 1 bis 4,
dadurch gekennzeichnet,
daß das Schleifmaterial (Hartstoffkörner) der Polierschnecke (12) Siliziumcarbid, Wolframcarbid oder Edelkorund ist.

6. Werkzeuganordnung nach einem der Ansprüche 1 bis 5,
dadurch gekennzeichnet,
daß die Härte und die Verschleißeigenschaften des Kunststoffs der Polierschnecke (12) so ausgewählt sind, daß durch den Verschleiß ein Selbstschärfeffekt auftritt.

7. Werkzeugmaschine zum Feinbearbeiten der Zahnflanken von vorverzahnten Zahnrädern, mit einer ein Werkzeug in Form einer Schleifschnecke (10) zum Wälzschleifen tragenden, unter Wälzkopplung mit dem Werkstückträger drehantreibbaren Werkzeugspindel, die in einer hin- und herbewegbaren Werkzeugschlittenanordnung gelagert ist, mittels der bezüglich des Werkstücks ein Arbeitshub (A-B) und ein sich daran anschließender Rückhub (C-D) ausführbar ist,
dadurch gekennzeichnet,
daß auf der Werkzeugspindel, axial zur Schleifschnecke (10) versetzt, ein zweites Werkzeug in Form einer Polierschnecke (12) zum Wälzpolieren so angeordnet ist, daß der Rückhub (C-D) der Werkzeugschlittenanordnung den Arbeitshub der Polierschnecke (12) unter Beibehaltung der Wälzkopplung und ohne erneute Synchronisation zwischen Polierschnecke (12) und Werkstück bildet.

## Claims

1. A tool assembly for finishing the tooth flanks of pretoothed gearwheels by the hob method, comprising a tool in the form of a grinding worm (10) for hob grinding having a steel base coated with grains of hard material, and a plurality of spirals, **characterized** in that the grinding worm (10) is followed by an axial separator with a reduced diameter, which is followed by a second tool in the form of a polishing worm (12) with a plurality of spirals and made of a flexible synthetic material with embedded grains of hard material, and the spirals of the grinding and polishing worms have the same pitch and profile.

2. The tool of claim 1, **characterized** in that the polishing worm (12) and the grinding worm (10) have a substantially identical tooth profile.

3. The tool of claim 1 or 2, **characterized** in that the polishing worm (12) has a metal bushing, preferably made of steel, for taking up a tool spindle.

4. The tool of any of claims 1 to 3, **characterized** in that the synthetic material of the polishing worm (12) is a thermoplastic.

5. The tool of any of claims 1 to 4, **characterized** in that the grinding material (grains of hard material) of the polishing worm (12) is silicon carbide, tungsten carbide or special fused alumina.

6. The tool of any of claims 1 to 5, **characterized** in that the hardness and abrasive properties of the synthetic material of the polishing worm (12) are selected such that the abrasion brings about a self-sharpening effect.

7. A machine tool for finishing the tooth flanks of pretoothed gearwheels, comprising a tool spindle adapted to be rotated in rolling coupling with the workpiece carrier, said spindle bearing a tool in the form of a grinding worm (10) for hob grinding and being mounted in a reciprocating tool slide assembly for performing a working stroke (A-B) and a following return stroke (C-D) with respect to the workpiece, **characterized** in that a second tool in the form of a polishing worm (12) for hob polishing is disposed on the tool spindle, offset axially from the grinding worm (10), such that the return stroke (C-D) of the tool slide assembly constitutes the working stroke of the polishing worm (12) while maintaining the rolling coupling and without resynchronization between the polishing worm (12) and the workpiece.

## Revendications

1. Agencement d'outils pour la finition des flancs des dents d'ébauches de roues dentées selon un procédé en développante, comprenant un outil se présentant sous la forme d'une vis sans fin à rectifier (10) pour une rectification en développante qui présente un corps de base en acier revêtu de grains en matériau à résistance mécanique élevée ainsi que plusieurs spires, caractérisé en ce qu'un élément d'écartement axial de diamètre réduit se raccorde à la vis sans fin à rectifier (10), lequel élément est suivi par un deuxième outil se présentant sous la forme d'une vis sans fin à polir (12) à plusieurs spires qui est constituée d'une matière plastique souple dans laquelle sont insérés des grains de matériau à résistance mécanique élevée et en ce que les spires des vis sans fin à rectifier et à polir ont le même pas et le même profil.

2. Agencement d'outils selon la revendication 1, caractérisé en ce que la vis sans fin à polir (12) et la vis sans fin à rectifier (10) présentent sensiblement le même profil de dent.

3. Agencement d'outils selon la revendication 1 ou 2, caractérisé en ce que la vis sans fin à polir (12) présente une douille métallique, de préférence en acier, pour recevoir une broche porte-outil.

4. Agencement d'outils selon l'une des revendications 1 à 3, caractérisé en ce que la matière plastique de la vis à polir (12) est un thermoplastique.

5. Agencement d'outils selon l'une des revendications 1 à 4, caractérisé en ce que le matériau abrasif (grains de matériau à résistance mécanique élevée) de la vis sans fin à polir (12) est du carbure de silicium, du carbure de tungstène ou du corindon raffiné.

6. Agencement d'outils selon l'une des revendications 1 à 5, caractérisé en ce que la dureté et les propriétés d'usure de la matière plastique de la vis sans fin à polir (12) sont choisies de telle manière qu'un effet d'auto-affûtage ait lieu par l'usure.

7. Machine-outil pour la finition des flancs des dents d'ébauches de roues dentées, comprenant une broche porte-outil portant un outil qui se présente sous la forme d'une vis sans fin à rectifier (10) pour une rectification en développante et pouvant être entraînée en rotation avec le porte-pièce avec un accouplement à roulement, laquelle broche est montée dans un chariot porte-outil qui est mobile selon un mouvement de va-et-vient et au moyen duquel il est possible d'effectuer par rapport à la pièce une course de travail (A-B) et une course de retour (C-D) qui se raccorde à ladite course de travail, caractérisée en ce qu'un deuxième outil se présentant sous la forme d'une vis sans fin à polir (12) pour un polissage en développante est disposé sur la broche porte-outil, décalé axialement par rapport à la vis sans fin à rectifier (10) de telle manière que la course de retour (C-D) du chariot porte-outil forme la course de travail de la vis sans fin à polir (12) en conservant l'accouplement à roulement et sans nouvelle synchronisation entre la vis sans fin à polir (12) et la pièce.
